# EUROPÄISCHE PATENTSCHRIFT

(11) **EP 0 939 303 B1**
(45) Veröffentlichungstag und Bekanntmachung des Hinweises auf die Patenterteilung: **02.01.2008**
(21) Anmeldenummer: 98121651.8
(22) Anmeldetag: 12.11.1998
(51) Int. Cl.: G01F 1/684

(54) **Messvorrichtung zur Messung der Masse eines strömenden Mediums**
Measuring device for measuring the mass of a flowing medium
Dispositif pour mesurer la masse d'un milieu en écoulement

(30) Priorität: 27.02.1998 DE 19808248
(43) Veröffentlichungstag der Anmeldung: 01.09.1999
(73) Patentinhaber: Sensata Technologies Holland B.V., 1079 LH Amsterdam (NL)
(72) Erfinder: Wienecke, Thomas, 41352 Korschenbroich (DE); Blasczyk, Johann, 41542 Dormagen (DE); Lösing, Karl-Heinrich Dr., 46519 Alpen (DE); Witkowski, Peter, 41363 Jüchen (DE)
(74) Vertreter: von Kirschbaum, Alexander

(56) Entgegenhaltungen:
- EP-A- 0 717 270
- DE-A- 3 844 354
- DE-A- 4 219 454
- DE-A- 4 308 227
- US-A- 4 080 821
- U KONZELMANN ET AL: "Breakthrough in Reverse Flow Detection - A New Mass Air Flow Meter Using Micro Silicon Technology" SAE TECHNICAL PAPER SERIES,1. Januar 1995, Seiten 105-111, XP002084070

## Beschreibung

Die Erfindung betrifft eine Messvorrichtung nach dem Oberbegriff des Patentanspruchs 1.

Aus der DE 29 11 631 C2 ist eine Vorrichtung zur Messung der Masse eines strömenden Mediums bekannt. Ein als temperaturabhängiger Widerstand fungierender Heizdraht sowie ein weiterer temperaturabhängiger Widerstand sind hierbei an einem Sondenring in einem Rohrkörper ragend und über einen Steg an einem Einsatzkörper gelagert. Der Rohrkörper stellt den Strömungsquerschnitt, beispielsweise ein Ansaugrohr einer Brennkraftmaschine, dar. Im Einsatzkörper befinden sich eine elektrische Regeleinrichtung, die als Hybridschaltkreis ausgebildet ist und auf einer Montageplatte aufgeklebt ist. In Dickschichttechnik sind Leiterbahnen auf einer Trägerplatte aufgebracht. Zur Ablagerungsreinigung des Hitzedrahtes wird nach einem bestimmtem Messzyklus ein erhöhter Strom über diesen geführt.

Die DE 38 44 354 A1 offenbart eine weitere Messvorrichtung. Ein Keramiksubstrat mit wenigstens einer temperaturabhängigen Widerstandsschicht wird einseitig von einem Messkörper gehalten und ragt in einem Strömungsdurchbruch hinein. Dieser Messkörper wird in einem Strömungsquerschnitt eingebracht, wobei das strömende Medium durch den Strömungsdurchbruch fließt.

Um zur vermeiden, dass dieses Keramiksubstrat zerstört wird, sind Stützelemente sowie Schutzstege im Strömungsdurchbruch vorgesehen.

Gemäß der DE 43 08 227 A1, die ein Messelement zur Bestimmung der Masse eines strömenden Mediums offenbart, erfolgt ebenfalls ein einseitiges Einspannen eines Substrates, auf dem sich ein Mess- und ein Heizwiderstand sowie ein Kompensationswiderstand befinden.

US 4,080,821 beschreibt eine Vorrichtung zur Messung der Masse eines strömenden Mediums, wobei sich ein Messkörper quer zur Strömungsrichtung erstreckt und ein in Strömungsrichtung verlaufender Venturiabschnitt vorgesehen ist. Am Messkörper schließt sich ein Gehäuse an, durch das der Venturiabschnitt gebildet ist, in dem drei Temperatursensoren angeordnet sind. Die Sensoren sind in einer Region des Venturiabschnitts angeordnet, die aus einem Material besteht, das eine niedrigere Wärmeleitfähigkeit aufweist, so dass die Sensoren im Wesentlichen thermisch isoliert mit dem Gehäuse verbunden sind.

EP 0 717 270 beschreibt eine Messvorrichtung zur Messung der Masse eines strömenden Mediums mit einem in Strömungsrichtung verlaufenden Strömungsdurchbruch, wobei eine Vielzahl von Detektorelementen auf einer Grundplatte montiert sind, die mit einer Stromquelle sowie einem Signalprozessor verschaltet sind, so dass die Flussrate aufgrund des zugeführten Stroms errechnet werden kann. Die Grundplatte zum Befestigen der Detektorelemente weist ein metallisches Material auf, wobei zwischen der Grundplatte und den Detektorelementen ein Glassubstrat angebracht ist.

XP 2084070 beschreibt einen Luftmassenmesser mit einem Messkörper, der sich quer zur Strömungsrichtung erstreckt, sowie einem Bypasskanal, der sich in Strömungsrichtung erstreckt. In dem Bypasskanal sind ein Heizsensor sowie zwei Temperatursensoren angeordnet. Die Sensoranordnung ist auf einer Metallschicht befestigt und weist eine geringe thermische Masse auf.

DE 42 19 454 beschreibt einen Massenflusssensor gemäß dem Oberbegriff von Anspruch 1 zum Nachweis der Intensität eines Medienstromes mit einem Messkörper, der sich quer zur Strömungsrichtung erstreckt und einen Strömungsdurchbruch aufweist, der sich in Strömungsrichtung erstreckt. Im Strömungsdurchbruch ist eine Membran angeordnet, auf der ein Heizsensor sowie ein Temperatursensor angebracht sind. Die Membran ist dielektrisch ausgebildet und weist ein geringes thermisches Leitvermögen auf. Zwischen der Membran und einem mit Rippen versehenen Kühlkörper auf der Unterseite des Mebßkörpers befindet sich ein Hohlraum.

Aufgabe der Erfindung ist es, eine Messvorrichtung der gattungsgemäßen Art zu schaffen, bei der die Wärmeabfuhr vom Meßelement verbessert wird.

Gelöst wird die Aufgabe durch die Merkmale des Patentanspruchs 1.

Ein Messelement wird im Strömungsdurchbruch eines Gehäuses derart gelagert, dass eine allseitige Fixierung bzw. Einspannung im Gehäuse erfolgt, wobei das strömende Medium am bzw. über das Messelement einseitig vorbeigeführt wird. Durch die Einbettung des Messelementes im Gehäuse ist dieses Messelement vor Bruch und damit Zerstörung geschützt, weist zudem einen robusten aber einfachen Aufbau auf. Bedingt durch das allseitige Fixieren im Gehäuse wird zudem eine spannungsfreiere Lagerung des Messelements erreicht. Auch gegenüber Strömungen ist das Messelement dieser Messvorrichtung geschützt, da das Messelement mit dem Strömungsdurchbruch des Gehäuses fluchtet, so dass die Strömungen das Messelement selbst nicht angreifen können.

Vorteilhafte Ausführungen sind in den Unteransprüchen enthalten.

Da bereits am Messelement, auf dem sich Sensoren befinden, ein Kühlkörper angebracht ist, erfolgt in direkter Nähe der Sensoren die Temperaturabgabe an die Umgebung. Vorteilhaft ist auch, dass das Messelement und ein Elektronikteil für die notwendige Auswertung und Regelung innerhalb dieser Messvorrichtung angebracht werden können. Dazu werden sowohl das Messelement als auch das Elektronikteil, die beide in Hybrid- bzw. Siliciumtechnologie hergestellt sind, nebeneinander, d. h. in einer Ebene in die Vorrichtung integriert. Die Sensoren des Messelementes sind durch Membranen, die auf einem Substrat des Messelementes aufgebracht sind, unter anderem auch vor Verschmutzungen geschützt. Ein Messelement unter Nutzung von Membranelementen auf einem Substrat ist in einer weiteren Anmeldung offenbart.

Durch die Anordnung von zwei Heizsensoren und zwei Temperatursensoren auf einem Messelement und damit in direkter Nähe zueinander kann mit nur einer Messvorrichtung sowohl die Menge des strömenden Mediums als auch deren Strömungsrichtung ermittelt werden. Die Detektierung von kleinen Restströmungen des Mediums ist gleichfalls möglich. Dabei sind jeweils die Heizsensoren und Temperatursensoren innerhalb von zwei getrennten Membranen auf einem Substrat untergebracht.

Durch die Anbringung eines Rahmens um den Sensorträger, d. h. um das Messelement, wird eine optimale Strömungskanalgeometrie geschaffen, wobei sich eine Einschnürung im Strömungsdurchbruch einstellt.

Anhand eines Ausführungsbeispiels mit Zeichnung soll die Erfindung näher erläutert werden. Es zeigt:
- Figur 1: eine erfindungsgemäß ausgestaltete Meßvorrichtung in vereinfachter Darstellung,
- Figur 2: einen Ausschnitt A der Meßvorrichtung aus Fig. 1,
- Fig. 2a: eine weitere Ausführung im Schnitt A der Meßvorrichtung aus Fig. 1,
- Figur 3: eine Schnittdarstellung im Schnitt III-III aus Fig. 2,
- Figur 4: eine Draufsicht auf ein Meßelement.

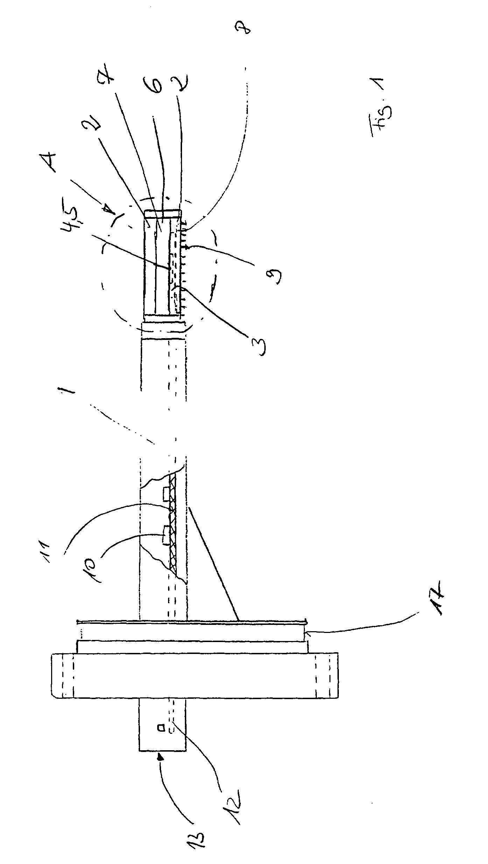

Die in Figur 1 dargestellte Meßvorrichtung weist an einem Meßkörper 1 außer anderen hier nicht näher dargestellten und bezeichneten Teilen ein Gehäuse 2 für ein Meßelement 3 mit Sensoren 4, 5 als Heizsensor 4 und Temperatursensor 5 auf. In dem Gehäuse 2 ist ein Strömungsdurchbruch 6 für eine Strömung 7 eingearbeitet. Das Meßelement 3 liegt dabei plan im Gehäuse 2 unterhalb bzw. oberhalb der Strömung 7 etwa mittig im Strömungsdurchbruch 6. Am Meßelement 3 und vorzugsweise im Gehäuse 2 integriert ist ein Kühlkörper 8, beispielsweise aus Aluminium, mit Rippen 9.
Im Meßkörper 1 sind Elektronikteile 10 auf einem Hybrid 11 untergebracht, die elektrisch über einen Steckverbinder 12 im Anschlußteil 13 mit einer weiteren Elektronik bzw. eine Stromversorgungseinheit (nicht dargestellt) zur Regelung der Ansaugluft sowie diversen Anzeigen (nicht dargestellt) verbunden sind. Das Elektronikteil 10 kann eine vollständige Auswert- und Regelelektronik beispielsweise ein Mikroprozessor beinhalten und ist mit Anschlüssen und Leiterbahnen auf dem Hybrid 11 installiert sowie mit dem Meßelement 3 kontaktiert.

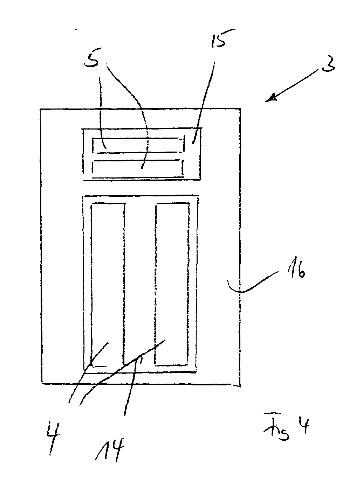

In Figur 2 ist das Gehäuse 2 im Bereich des Strömungsdurchbruches 6 leicht vergrößert dargestellt. In dieser Ausführung ist das Gehäuse 2 einteilig ausgeführt und beispielsweise in Spritzgußtechnik nach Einbringung des Meßelementes 3 hergestellt. Das Meßelement 3, das in Fig. 4 noch näher beschrieben ist, schließt mit seiner oberen Fläche 3.1 mit dem Strömungsdurchbruch 6 im unteren Gehäusebereich 2.2 ab. An der unteren Fläche 3.2 des Meßelementes 3 ist der Kühlkörper 8 mit Rippe 9 angeklebt, vorzugsweise mit einem Wärmeleitkleber.

Fig. 2a stellt eine weitere Gehäusevariante dar. Das Gehäuse 2 setzt sich dabei aus zwei Teilen zusammen, wobei das obere Gehäuseteil 2.1 auf dem unteren Gehäuseteil 2.2 aufgeschnappt ist. Auch hierbei schließt das Meßelement 3 mit der Fläche des unteren Gehäuseteils 2.2 ab. Der Strömungsdurchbruch 6 wird durch die beiden Teile 2.1 und 2.2 des Gehäuses 2 gebildet.

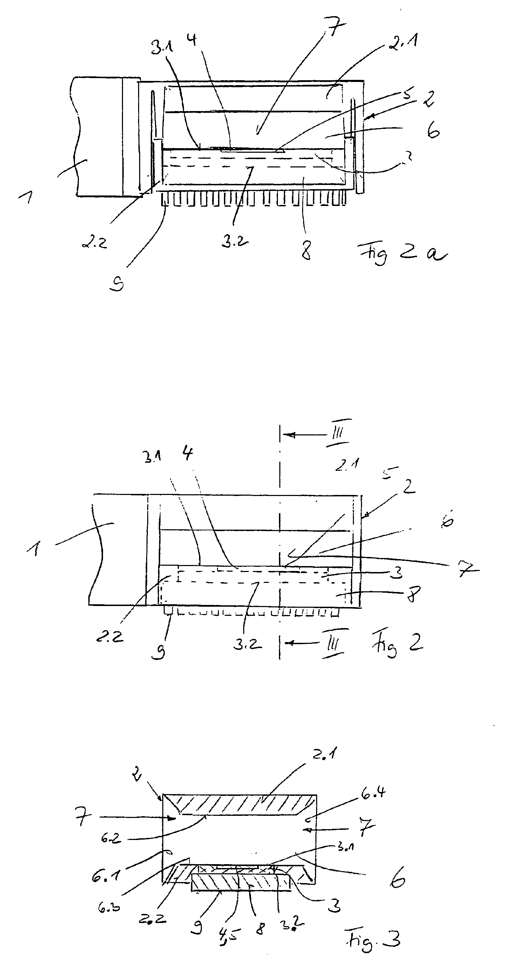

In Fig. 3 ist der Strömungsdurchbruch 6 im Schnitt III-III aus Fig. 2 dargestellt. Dieser Strömungsdurchbruch 6 ist ein Strömungskanal, der im Einlaufquerschnitt 6.1 eine Verengung aufweist, danach im Bereich des Meßelementes 3 parallel zueinanderliegende Seiten 6.2 und 6.3 aufweist und im Auslaufquerschnitt 6.4 sich wieder erweitert, wobei der Auslaufquerschnitt 6.4 je nach Strömungsrichtung 7 auch zum Einlaufquerschnitt werden kann. Diese Kanalform des Strömungsdurchbruchs 6 ist vorteilhaft, um die Verschmutzung an den Sensoren 4 und 5 gering zu halten, um die Meßvorrichtung winkelunempfindlich zu gestalten, insbesondere aber, um Rückströmungen zu detektieren, wozu das Meßelement 3 vorzugsweise zwei Heizsensoren 4 und zwei Temperatursensoren 5 aufweist.

In Fig. 4 ist das Meßelement 3 in einer Draufsicht vereinfacht dargestellt. Auf dem Meßelement 3 befinden sich zwei getrennte Membranen 14 und 15, in die mindestens ein Heizsensor 4 bzw. mindestens ein Temperatursensor 5 eingebettet sind. Durch die über den Sensoren 4, 5 befindlichen Membranen 14 bzw. 15 sind die Sensoren 4, 5 selbst vor Verunreinigungen geschützt. Die Membranen 14, 15 bestehen aus Siliciumoxidschichten, die auf einem Substrat 16 des Meßelementes 3 aufgebracht sind und in die für die Schaffung der Sensoren 4 und 5 je eine leitende Schicht beispielsweise aus Nickel eingebracht ist. Das Meßelement 3 wird in Halbleitertechnologie hergestellt, wobei das Substrat 16 aus Silicium besteht, wodurch kleine Strukturen auf dem Substrat 16 aufgebracht werden können.
Die Meßvorrichtung wird in einem Einspannteil 17 des Meßkörpers 1 (siehe Figur 1) in einen nicht näher dargestellten Ansaugkanal befestigt, wobei der Strömungsdurchbruch 6 in die Strömungsrichtung 7 weist. Über die Sensoren 4, 5 wird die strömende Masse in bekannter Art und Weise detektiert, wozu die Sensoren 4, 5 mit weiteren der übersichtlichkeitshalber nicht dargestellten passiven Widerstände zu einer bekannten Brückenschaltung zusammengeschlossen sind. Diese Widerstände können auf dem Substrat des Meßelements 3 oder dem Hybrid 11 aufgebracht sein.
Bei Verwendung von vorzugsweise zwei Heizsensoren 4 und zwei Temperatursensoren 5 der gleichen Art sind auch die Strömungsrichtung 7 sowie kleine Restströmungen detektierbar. Bei der Anordnung von zwei Heizsensoren 4 und zwei Temperatursensoren 5 sollten die beiden Heizsensoren 4 möglichst nahe beieinander liegen, um die Polarisation, d. h. die Strömungsrichtung 7 sowie die Rückströmung zu ermitteln, ohne jedoch ein thermisches Übersprechen vom vorderen zum hinteren Sensor durch Wärmeleitung zuzulassen. Im Normalbetrieb dürfen die Heizsensoren 4 und die Temperatursensoren 5 sich nicht gegenseitig beeinflussen.

Im Rahmen des Erfindungsgedankens sind auch Änderungen möglich. So können mit zwei Meßvorrichtungen der beschriebenen Art und der Nutzung von je einem Heizsensor 4 und einem Temperatursensor 5 auf einem Meßelement 3 die Strömungsrichtung 7 und die Rückströmungen ermittelt werden. Dazu kann der Strömungsdurchbruch 6 eine venturiartige Kanalform aufweisen. Zur erhöhten Kühlung der Meßvorrichtung ist es auch möglich, am Meßkörper 1 selbst zusätzliche Kühlkörper anzubringen, die vorzugsweise mit dem Kühlkörper 8 in Verbindung stehen.

## Patentansprüche

1. Messvorrichtung zur Messung der Masse eines strömenden Mediums, insbesondere zur Messung der Ansaugluftmasse von Brennkraftmaschinen, mit einem sich quer zur Strömungsrichtung erstreckenden Messkörper (1) und einem in Strömungsrichtung verlaufenden Strömungsdurchbruch (6),
wobei am Messkörper (1) quer zur Strömungsrichtung ein den Strömungsdurchbruch (6) aufweisendes Gehäuse (2) anschliesst, in dem ein Messelement (3), welches eine obere Fläche (3.1) und eine untere Fläche (3.2) besitzt, derart eingebettet ist, dass die Strömung (7) einseitig an der oberen Fläche (3.1) des Messelements (3) vorbeiströmt,
und wobei auf der oberen Fläche des Messelements mindestens ein Heizsensor (4) und mindestens ein Temperatursensor (5) aufgebracht sind,
**dadurch gekennzeichnet,**
**dass** an den Teil der unteren Fläche (3.2) des Messelements (3), der den Sensoren unmittelbar gegenüberliegt, ein mit Rippen versehener Kühlkörper (8) angrenzt.

2. Messvorrichtung nach Anspruch 1, **dadurch gekennzeichnet, dass** das Messelement (3) in das Gehäuse (2) derart eingebettet ist, dass eine allseitige Fixierung bzw. Einspannung im Gehäuse (2) erfolgt.

3. Messvorrichtung nach Anspruch 1 oder 2, **dadurch gekennzeichnet, dass** der Kühlkörper (8) Bestandteil des Gehäuses (2) ist.

4. Messvorrichtung nach einem der Ansprüche 1-3, **dadurch gekennzeichnet, dass** das Gehäuse (2) aus einem am Messkörper (1) fest angebrachten Teil (2.1) und einem abnehmbaren Teil (2.2) besteht.

5. Messvorrichtung nach einem der Ansprüche 1-4, **dadurch gekennzeichnet, dass** im Messkörper (1) einige Elektronikteile (10) auf einem Hybrid (11) angeordnet sind.

6. Messvorrichtung nach einem oder mehreren der vorgenannten Ansprüche, **dadurch gekennzeichnet, dass** der Strömungsdurchbruch (6) als Strömungskanal ausgebildet ist, der ein Vierkantloch aufweist und im Einlaufquerschnitt (6.1) eine Verengung besitzt, danach im Bereich des Messelementes (3) parallel zueinanderliegende Seiten (6.2, 6.3) aufweist sowie einen Auslaufquerschnitt (6.4) besitzt, der sich wieder erweitert.

7. Messvorrichtung nach einem oder mehreren der vorgenannten Ansprüche, **dadurch gekennzeichnet, dass** das Messelement (3) aus einem Substrat (16) besteht, auf dem mindestens zwei separate Membranen (14, 15) aufgebracht sind, wobei mindestens ein Heizsensor (4) in der einen Membran (14) und ein Temperatursensor (5) in der anderen Membran (15) eingebettet ist.

## Claims

1. A measuring device for measuring the mass of a flowing medium, particularly for measuring the intake air mass of internal combustion engines, comprising a measuring body (1) extending transversely to the flow direction, and a flow passage (6) extending in the flow direction,
the measuring body (1) being followed, transverse to the flow direction, by a housing (2) comprising said flow passage (6), a measuring element (3) with an upper surface (3.1) and a lower surface (3.2) being embedded in said housing (2) a manner causing the flow (7) to stream on one side along the upper surface (3.1) of the measuring element (3), and
at least one heating sensor (4) and at least one temperature sensor (5) being arranged on the upper surface of the measuring element,
**characterized in**
**that** a cooling body (8) provided with ribs is located adjacent to that part of the lower surface (3.2) of the measuring element (3) which is arranged directly opposite to the sensors.

2. The measuring device according to claim 1, **characterized in that** the measuring element (3) is embedded in the housing (2) in a manner causing the measuring element (3) on all sides to be fixed and clamped, respectively, in the housing (2).

3. The measuring device according to claim 1 or 2, **characterized in that** said cooling body (8) is a part of the housing (2).

4. The measuring device according to any one of claims 1-3, **characterized in that** the housing (2) comprises a part (2.1) fixedly attached to the measuring body (1), and a removable part (2.2).

5. The measuring device according to any one of claims 1-4, **characterized in that**, in the measuring body (1), a number of electronic components (10) are arranged on a hybrid (11).

6. The measuring device according to any one or a plurality of the preceding claims, **characterized in that** said flow passage (6) is formed as a flow channel comprising a square hole and, in the intake cross section (6.1), being provided with a constriction, downstream thereof comprising mutually parallel sides (6.2,6.3) and having a discharge cross section (6.4) which is widening again.

7. The measuring device according to any one or a plurality of the preceding claims, **characterized in that** the measuring element (3) comprises a substrate (16) having at least two separate membranes (14, 15) arranged thereon, at least one heat sensor (4) being embedded in one of said membranes (14) and a temperature sensor (5) being embedded in the other membrane (15).

## Revendications

1. Dispositif de mesure permettant de mesurer la masse d'un milieu en écoulement, en particulier permettant de mesurer la masse d'air aspiré de moteurs à combustion interne, comportant un corps de mesure (1) s'étendant transversalement à la direction d'écoulement et un passage d'écoulement (6) s'étendant dans la direction d'écoulement,
moyennant quoi, au corps de mesure (1) est associé un boîtier (2) présentant le passage d'écoulement (6), transversalement à la direction d'écoulement, et un élément de mesure (3), présentant une surface supérieure (3.1) et une surface inférieure (3.2) est intégré dans le boîtier de telle sorte que l'écoulement (7) passe d'un côté de la surface supérieure (3.1) de l'élément de mesure (3),
et, sur la surface supérieure de l'élément de mesure sont apposés au moins un capteur de chaleur (4) et au moins un capteur de température (5),
**caractérisé en ce que**
à côté de la partie de la surface inférieure (3.2) de l'élément de mesure (3) opposé directement aux capteurs, se trouve un corps de refroidissement (8) doté de nervures.

2. Dispositif de mesure selon la revendication 1, **caractérisé en ce que** l'élément de mesure (3) est intégré dans le boîtier (2), de telle sorte qu'on obtient une fixation ou un blocage dans le boîtier (2) de tous les côtés.

3. Dispositif de mesure selon la revendication 1 ou 2, **caractérisé en ce que** le corps de refroidissement (8) est une partie constituante du boîtier (2).

4. Dispositif de mesure selon l'une quelconque des revendications 1 à 3, **caractérisé en ce que** le boîtier (2) est constitué d'un élément (2.1) apposé fermement sur le corps de mesure (1) et d'un élément amovible (2.2).

5. Dispositif de mesure selon une quelconque des revendications 1 à 4, **caractérisé en ce que**, dans le corps de mesure (1), des pièces électroniques (10) propres sont disposées sur un élément hybride (11).

6. Dispositif de mesure selon l'une ou plusieurs des revendications précédentes, **caractérisé en ce que** le passage d'écoulement (6) est configuré sous la forme d'un canal d'écoulement, qui présente un trou carré et possède un rétrécissement dans la section d'admission (6.1), puis présente des faces juxtaposées parallèlement (6.2, 6.3) dans la zone de l'élément de mesure (3) et comporte une section d'évacuation (6.4), qui s'évase de nouveau.

7. Dispositif de mesure selon l'une ou plusieurs des revendications précédentes, **caractérisé en ce que** l'élément de mesure (3) est constitué d'un substrat (16), sur lequel sont apposées au moins deux membranes séparées (14, 15), au moins un capteur de chaleur (4) étant intégré dans une membrane (14) et un capteur de température (5) étant intégré dans l'autre membrane (15).
